Europäisches Patentamt

European Patent Office

Office européen des brevets

(11) Numéro de publication : **0 437 154 B1**

(12) **FASCICULE DE BREVET EUROPEEN**

(45) Date de publication du fascicule du brevet :
20.07.94 Bulletin 94/29

(21) Numéro de dépôt : **90420580.4**

(22) Date de dépôt : **28.12.90**

(51) Int. Cl.⁵ : **C01G 25/02,** C04B 35/48

(54) **Zircone stabilisée par les oxydes d'yttrium et de cérium.**

(30) Priorité : **05.01.90 FR 9000242**

(43) Date de publication de la demande :
**17.07.91 Bulletin 91/29**

(45) Mention de la délivrance du brevet :
**20.07.94 Bulletin 94/29**

(84) Etats contractants désignés :
**DE ES FR GB IT**

(56) Documents cités :
**EP-A- 0 194 191**
**EP-A- 0 320 345**
**GB-A- 2 204 030**
**US-A- 4 853 353**
**JOURNAL OF MATERIALS SCIENCE LETTERS vol. 5, no. 11, novembre 1986, pages 1140-1142, London, GB; T. SATO et al.: "Improvement of thermal stability of yttria-doped tetragonal zirconia polycrystals by doping CeO2 on the surface"**
**JOURNAL OF MATERIALS SCIENCE vol. 24, no. 12, décembre 1989, pages 4467-4474, London, GB; J.G. DUH et al.: "Fabrication and sinterability in Y2O3-CeO2-ZrO2 "**

(73) Titulaire : **Compagnie Européenne du Zirconium CEZUS**
**Tour Manhattan**
**La Défense 2**
**6, place de l'Iris**
**F-92400 Courbevoie (FR)**

(72) Inventeur : **Bastide, Bernard**
**RN 75 - Le Village**
**F-38500 La Buisse (FR)**
Inventeur : **Barral, Robert**
**l'Echaillon**
**F-73300 St. Jean de Maurienne (FR)**
Inventeur : **Coutures, Jean-Pierre**
**CNRS-CRPHT**
**F-45071 Orleans Cedex 2 (FR)**
Inventeur : **Dupin, Thierry**
**36 Av. Paul Cézanne**
**F-13090 Aix-en-Provence (FR)**
Inventeur : **Odier, Philippe**
**107 rue du Désert**
**F-45560 St. Denis-en-Val (FR)**

(74) Mandataire : **Séraphin, Léon et al**
**PECHINEY**
**28, rue de Bonnel**
**F-69433 Lyon Cedex 03 (FR)**

## Description

### DOMAINE TECHNIQUE

L'invention concerne une poudre de zircone stabilisée uniquement à l'aide des oxydes d'yttrium et de cérium; une telle poudre permet l'obtention d'une part de pièces frittées ayant une résistance mécanique notablement améliorée à des températures supérieures à 300°C en atmosphère sèche ou humide, ou à froid après recuit à haute température. et d'autre part des revêtements par projection plasma ayant une adhérence à chaud également améliorée. Elle concerne aussi un procédé particulier d'obtention desdites poudres.

### ETAT DE LA TECHNIQUE

Il est connu d'obtenir des pièces céramiques ayant d'excellentes propriétés mécaniques en utilisant de la zircone stabilisée en phase quadratique (ou tétragonale) dont l'état métastable est obtenu :
- par addition de Y2O3 dans la proportion de 2 à 7% mole comme agent stabilisant.
- et par contrôle de la texture et de la taille des grains après frittage.

Cependant l'utilisation de ces céramiques est limitée à un domaine de température inférieur à 200°C. En effet, au-dessus de cette température, la phase quadratique évolue vers la phase monoclinique avec un effondrement des propriétés mécaniques; ce phénomène est accéléré en présence de vapeur d'eau et dans ce cas la limite supérieure d'utilisation ne dépasse pas 100°C.

La substitution de l'oxyde d'yttrium par de l'oxyde de cérium permet d'éviter l'effondrement des propriétés mécaniques à chaud, mais ceci entraîne une baisse des caractéristiques mécaniques à froid.

On a alors proposé (EP-A- 151335-NGK) l'addition simultanée d'oxyde d'yttrium et de cérium pour pallier cet inconvénient, ce qui a permis de maintenir les caractéristiques mécaniques à un niveau élevé après un séjour de 5000 h à 250°C en atmosphère sèche. Mais le niveau desdites caractéristiques est encore insuffisant et le domaine de température trop restreint; de plus, il est important de maintenir un haut niveau de caractéristiques mécaniques après maintien de longue durée en atmosphère chaude et humide.

C'est ainsi que pour les améliorer on peut ajouter, à ce mélange ternaire, de l'alumine en quantité importante (FR-A- 2579199- Noritake).

Il est aussi connu du brevet US-A- 4.853.353 que l'on peut obtenir des pièces frittées dont la surface est composée de zircone stabilisée tétragonale qui ne présente pas de dégradation après vieillissement à basse température (200°C) dans l'air, les pièces ayant de préférence la composition suivante : $Y_2O_3$ compris entre 2 et 3% molaire, $CeO_2$ compris entre 0 et 6% poids, solde zircone.

Il est enfin également connu dans le document Journal of Materials Science vol.24 n°12 décembre 1989 page 4467-4474 "Fabrication and sinterability in $Y_2O_3$ -$CeO_2$- $ZrO_2$ " que la zircone tétragonale stabilisée par le $CeO_2$ (10% molaire) et dopée avec $Y_2O_3$ a une bonne stabilité après vieillissement à basse température (250°C) en présence d'eau.

Ainsi, la demanderesse a recherché une poudre de zircone stabilisée permettant d'améliorer, dans des pièces frittées réalisées à partir de ladite poudre, non seulement les propriétés mécaniques, mais surtout leur stabilité à des températures élevées, par exemple supérieures à 300°C, y compris en présence de vapeur d'eau, et permettant également d'effectuer des revêtements, par projection plasma, parfaitement adhérents et solides.

Un autre objet de l'invention concerne les pièces frittées et les revêtements obtenus par projection à chaud, réalisés à partir de ces poudres, ainsi que leur procédé d'obtention.

### DESCRIPTION DE L'INVENTION

L'invention est une poudre de zircone, destinée à l'obtention de pièces céramiques frittées ou de revêtements par projection à chaud, de propriétés mécaniques améliorées et stables après recuit de longue durée à une température élevée y compris en atmosphère humide, stabilisée à l'aide des oxydes d'yttrium et de cérium, caractérisée en ce qu'elle contient entre 1 et 3,5% molaire de Y2O3 et entre 6 et 9% molaire de CeO2, et de préférence entre 1 et 2,5% molaire de Y2O3 et entre 6 et 8% de CeO2.

La surface spécifique de la poudre selon l'invention est généralement comprise entre 4 et 25 m2g-1 et de préférence entre 6 et 18 m2g-1 et les 95% des particules constitutives ont une dimension comprise entre 0,2 et 2 µm, de préférence entre 0,3 et 1 µm, quand elle est destinée à faire des pièces frittées.

Quand elle est destinée à la confection de revêtements par projection à chaud (par exemple par projection plasma) 95% des particules ont une dimension comprise entre 10 et 100 µm et de préférence entre 10 et 60 µm.

Un procédé préférentiel pour obtenir la poudre selon l'invention, notamment la poudre destinée à l'obtention de pièces frittées, consiste à partir d'une poudre de zircone de surface spécifique habituellement comprise entre 4 et 75 m2g-1 de granulométrie moyenne inférieure à 0,1 μm que l'on imprègne dans les proportions voulues en l'introduisant dans une solution de sels, d'yttrium et de cérium, décomposables thermiquement, par exemple nitrate, acétate ... La suspension obtenue est filtrée, séchée, par exemple par atomisation, puis calcinée pour détruire lesdits sels solubles et les transformer en oxydes. La température de calcination est généralement supérieure à environ 750°C.

Un procédé également particulièrement intéressant pour obtenir une poudre selon l'invention ayant de plus des grains sphériques, par exemple destinée à la confection de revêtements par projection à chaud, consiste à mettre en suspension aqueuse de la zircone, de l'oxyde d'yttrium et de l'oxyde de cérium sous forme pulvérulente, optionnellement avec un liant organique généralement du type alcool polyvinylique, polyéthylène glycol... , puis à sécher cette suspension de préférence par atomisation et éventuellement à calciner.

D'autres procédés d'obtention de la poudre stabilisée peuvent également être mis en oeuvre comme la coprécipitation, les procédés sol-gel; ils sont alors suivis d'un séchage et d'une calcination.

Pour l'obtention de pièces frittées, tous procédés de frittage peuvent être utilisés, par exemple compression uniaxe ou isostatique à froid puis frittage, ou mieux frittage sous charge et particulièrement celui sous charge isostatique (hot isostatic pressing, HIP) qui permet d'obtenir les meilleurs résultats. Les températures de frittage utilisées sont généralement comprises entre 1200 et 1700°C et de préférence entre 1350°C et 1550°C.

Les pièces obtenues ont une rupture à la flexion à froid après frittage habituellement comprise entre 750 et 1200 MPa et pouvant atteindre 2000 MPa, les mesures étant faites sur des éprouvettes présentant un poli dont la rugosité arithmétique est de 0,2 μm environ. La proportion de zircone en phase quadratique (tétragonale) est supérieure à 98% et dans la majorité des cas atteint 100%, c'est-à-dire que les pièces sont pratiquement entièrement en phase quadratique.
Leur densité est supérieure à 97% de la densité théorique et de préférence supérieure à 98% et la grosseur des grains se situe entre 0,1 et 0,6 μm.

Après maintien à chaud à des températures supérieures à 300°C en présence de vapeur d'eau et a fortiori en atmosphère sèche, la rupture à la flexion se situe encore entre 550 et 1200 MPa. On note même qu'en atmosphère sèche ces céramiques ne présentent aucune évolution structurale ou chimique (variation locale de composition) après maintien à des températures pouvant atteindre 1700°C. Une telle absence d'évolution de la structure, ou une telle constance dans la répartition volumetrique des éléments stabilisants est vraisemblablement due à un blocage mutuel desdits éléments empêchant leur migration et est très favorable à l'amélioration des caractéristiques mécaniques des céramiques. En effet, lesdits éléments jouent alors pleinement leurs rôles de maintien des structures bénéfiques en tous points, ce qui évite les amorces de rupture qui autrement pourraient se produire, par exemple par un manque relatif d'un des éléments stabilisants. Ces propriétés permettent d'élargir les domaines de température d'utilisation de ces céramiques.

Dans le cas de la confection de revêtement par projection à chaud, la poudre selon l'invention convient à tous procédés physiques de dépôts de films réfractaires et à tous supports suffisamment réfractaires. En particulier, le dépôt par projection par plasma est bien adapté, par exemple à l'aide d'un mélange Ar + H2. Dans les dépôts ainsi obtenus, la proportion de zircone en phase quadratique est supérieure à 98%. Les dits dépôts ont été soumis à différents cycles de fatigue thermique, par exemple chocs thermiques répétés par alternance de contact avec une flamme et un jet d'air froid ou montée et maintien en température sous atmosphère humide et trempe à l'air ambiant, lesdits dépôts ont alors montré une tenue sans décollement à un nombre de cycles supérieur d'au moins 50% par rapport à un dépôt en matériau usuel ( par exemple zircone stabilisée à l'yttrium), tout en ne montrant pas d'augmentation de diffusion dans le matériau support.

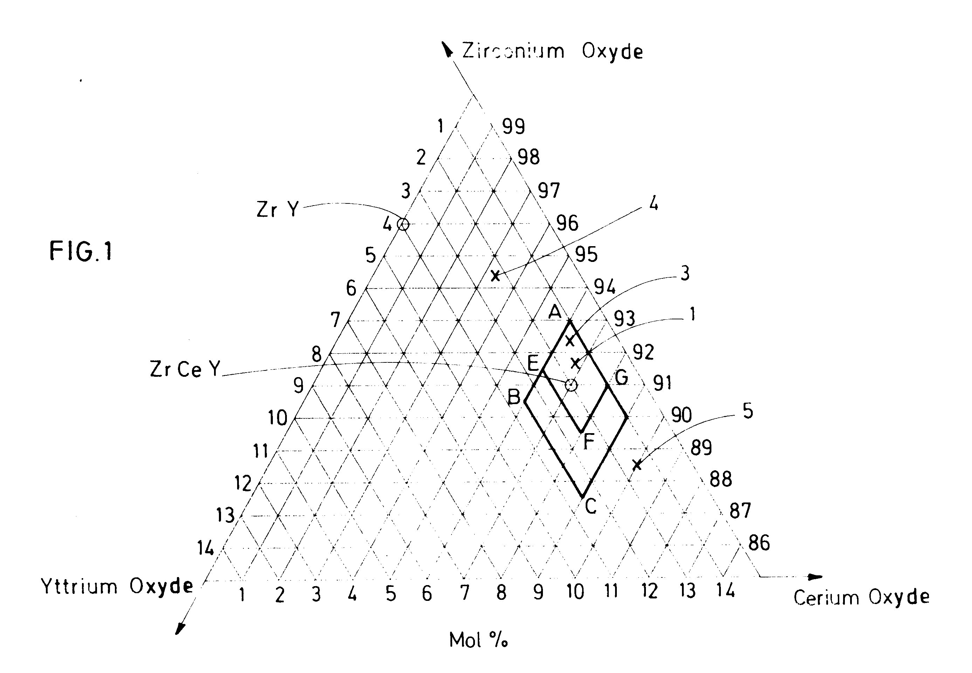

La figure 1 représente le diagramme ternaire ZrO2, Y2O3, CeO2 exprimé en % molaire dans lequel les quadrilatères ABCD représentent la plage définie par l'invention et AEFG la plage préférentielle. Les points 1 à 7 représentent les compositions testées dans les exemples.

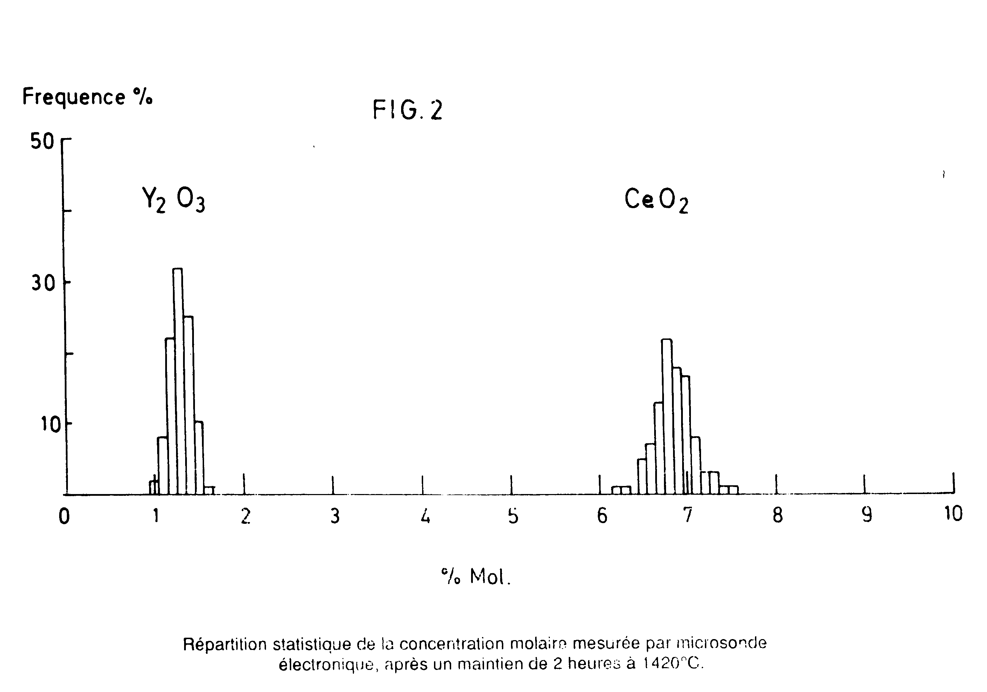

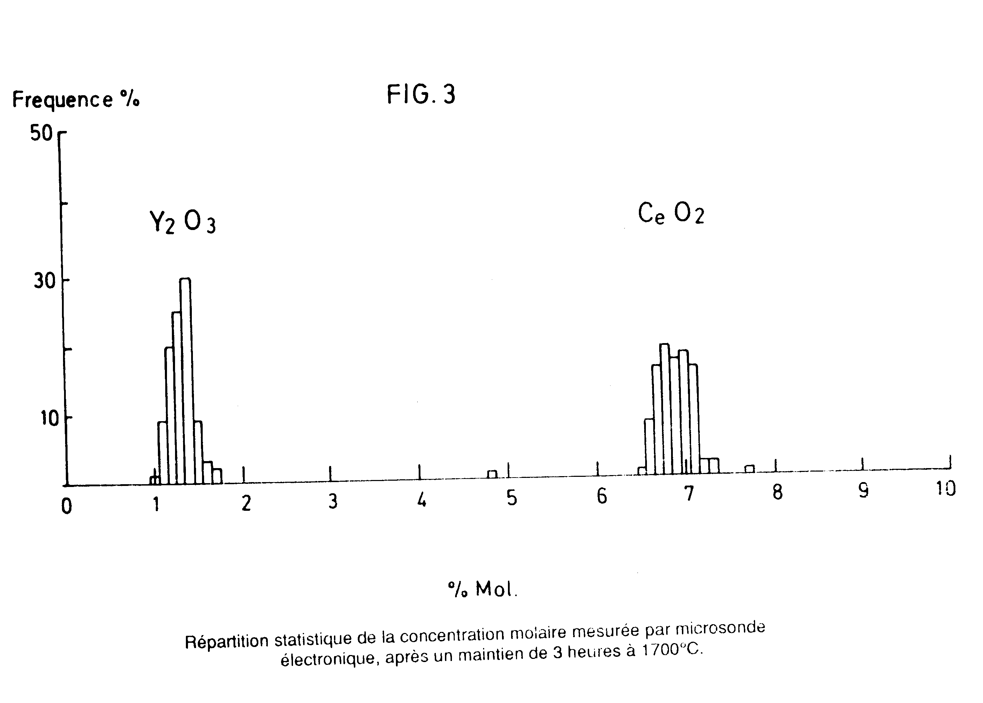

Les figures 2 et 3 représentent des exemples de la fréquence de répartition statistique de la concentration en éléments stabilisants ($Y_2O_3$ et $CeO_2$) en différents points de pièces céramiques, après maintien de 2h à 1420°C (fig. 2) ou de 3h à 1700°C (fig. 3). Les concentrations ont été mesurées par microsonde électronique. Ces figures illustrent l'absence de diffusion et de ségrégation significatives des éléments stabilisants, même à très haute température.

EXEMPLES

Exemple 1

Cet exemple permettra de comparer les caractéristiques mécaniques de pièces frittées obtenues à partir de poudres selon l'invention et selon l'art antérieur.

Ces poudres ont été obtenues par mise en suspension d'une poudre de zircone pure de surface spécifique 17,4 m2g-1, à raison de 100 g de solide pour 100 g d'eau, puis les quantités requises de nitrate de cérium et yttrium ont été dissoutes.

On élimine ensuite l'eau par séchage par atomisation puis calcine 3h à 750°C. La poudre obtenue se présente sous forme de billes de quelques dizaines de microns de diamètres. On la désagglomère pour obtenir un diamètre médian submicronique.

Les pièces ont été mises en forme par pressage hydrostatique à 160 MPa, le frittage a été fait à 1420°C pendant 2h.

On a ensuite mesuré la rupture à la flexion par une méthode 3 points, l'état de surface de l'éprouvette étant tel que Ra=0,2 μm. Elle a été mesurée à froid après frittage et après traitement thermique par maintien à 300°C pendant 3000 h en présence de vapeur d'eau.

Les résultats sont donnés dans le tableau 1 (essais 1-3-4-5) et ont été reportés avec le même repère sur la fig.1. Chaque essai est la moyenne d'au moins cinq éprouvettes.

TABLEAU 1

| N°ESSAI | COMPOSITION | | POUDRE | | DENSITE PIECE | | RUPT.A LA FLEXION | | PHASE QUADRATIQUE | |
|---|---|---|---|---|---|---|---|---|---|---|
| | Y2O3 % mol | CeO2 % mol | Surf. spécifi. m2g-1 | Diamètre médian µm | Crue % densité | Frittée théoriq | après frittage MPa | après traitem. thermiq. MPa | après frittage % | après traitem. thermiq. % |
| 1 | 1,3 | 6,9 | 18,2 | 0,3 | 51,1 | 99,1 | 903 | 755 | 100 | 100 |
| 3 | 1,1 | 6,2 | 16,9 | 0,33 | 50,1 | 98,7 | 906 | 695 | 100 | 100 |
| 4 | 2,4 | 3,1 | 16,7 | 0,29 | 50,2 | 99,2 | 980 | 300 | 100 | 30 |
| 5 | 1,5 | 10 | 17,1 | 0,32 | 51,2 | 98,6 | 589 | 422 | 92 | 79 |

Les essais 1 et 3 sont conformes à l'invention, les essais 4 et 5 représentent l'art antérieur.
On voit dans les essais 1 et 3 que les caractéristiques mécaniques mesurées à froid directement après frittage

se situent à un très bon niveau équivalent à celui de l'essai 4 de l'art antérieur à faible teneur en CeO2, et, a fortiori, à un niveau nettement meilleur que celui de l'essai 5 à forte teneur en CeO2 et hors du domaine de l'invention.
Mais avantageusement après fatigue thermique, les essais 1 et 3 montrent de façon inattendue une nette amélioration des caractéristiques mécaniques par rapport aux essais 4 et 5.

Ainsi, avec la poudre de l'invention, on ne remarque pas d'effondrement des caractéristiques mécaniques avec de fortes teneurs en CeO2, de plus fortes teneurs situées en dehors du domaine entraînant cet effondrement (essai 5), tout en notant une nette amélioration desdites caractéristiques après fatigue thermique.

Exemple 2

Cet exemple illustre les résultats obtenus lors de l'utilisation de la poudre selon l'invention pour façonner des revêtements par projection à chaud.
La poudre a été obtenue par mise en suspension aqueuse de zircone, d'oxyde d'yttrium et d'oxyde de cérium avec un liant organique dans les proportions suivantes :

- ZrO2 (diam.médian 0,7 micron) 52,0 % en poids
- Y2O3 (diam.médian 1,2 micron) 2,1 %
- CeO2 (diam.médian 0,9 micron) 5,7 %
- alcool polyvynilique 0,6 %
- H2O déminéralisée 42,6 %

La suspension a été atomisée dans un appareil de capacité d'évaporation de 10 kg/h. On a obtenu alors des particules sphériques comprises entre 15 et 60 $\mu$m et centrées sur 30 $\mu$m de composition :

- ZrO2 91 % mole
- Y2O3 2 % mole
- CeO2 7 % mole.

Plusieurs dépôts (intitulés ZrCeY sur la figure 1) ont été élaborés par projection plasma dans les conditions suivantes :

- mélange plasmagène : argon contenant 15% d'hydrogène
- puissance 35 kW
- débit de poudre 0,7 kg/h
- substrat : acier inox sous forme de pastilles de diamètre 2,5 cm, d'épaisseur 7 mm, revêtues d'une sous couche d'un alliage de Ni,Cr,Al,Y, de 0,1 mm d'épaisseur déposé par projection à l'air.

L'épaisseur des dépôts d'oxyde après polissage est d'environ 0,5 mm.

A titre de comparaison, on a réalisé dans des conditions identiques, des dépôts (intitulés ZrY sur la figure 1) de zircone stabilisée contenant 4% mole de Y2O3. On a obtenu les résultats suivants :

- porosité sensiblement identique pour les deux types de dépôts, de l'ordre de 10%
- fatigue thermique :
  a) choc thermique : on soumet les dépôts à des cycles comportant successivement une exposition à la flamme d'un brûleur oxyacétylénique pendant 1 min, puis à un jet d'eau à 20°C pendant 2 min. Le décollement se produit au bout de 310 cycles pour les dépôts ZrCeY et au bout de seulement 200 cycles pour les dépôts ZrY.
  b) tenue en atmosphère humide chaude : on soumet les dépôts à une montée en température de 300°C/h jusqu'à 600°C en atmosphère humide (100% d'humidité relative), on l'y maintient 10h, puis on laisse refroidir à l'air libre. Au bout de 150 cycles, les dépôts ZrCeY ne sont pas altérés, tandis qu'au bout de 100 cycles les dépôts ZrY se décollent.

**AVANTAGES DE L'INVENTION**

La poudre selon l'invention permet d'obtenir des pièces céramiques et des dépôts céramiques présentant de bonnes caractéristiques mécaniques et une bonne adhérence tant à froid qu'après exposition à des températures élevées, y compris en présence de vapeur d'eau.

En particulier en atmosphère sèche les céramiques ne présentent ni évolutions structurale ou dimensionnelle, ni variation de composition locale, après avoir été soumises à des températures atteignant 1700°C.

Ces propriétés permettent d'élargir le champ d'application des céramiques de zircone stabilisée qui était limité à des domaines de température très restreints et à des atmosphères sèches.

**Revendications**

1. Poudre de zircone, destinée à l'obtention de pièces céramiques frittées ou de revêtements par projection à chaud de propriétés mécaniques améliorées et stables après recuit de longue durée à température élevée, y compris en atmosphère humide, stabilisée à l'aide des oxydes d'yttrium et de cérium, caractérisée en ce qu'elle contient entre 1 et 3,5% molaire de Y2O3 et entre 6 et 9% molaire de CeO2.

2. Poudre selon la revendication 1 caractérisée en ce qu'elle contient entre 1 et 2% molaire de Y2O3 et entre 6 et 8% molaire de CeO2.

3. Poudre selon l'une quelconque des revendications 1 et 2 caractérisée en ce que sa surface spécifique est comprise entre 4 et 25 m2g-1, de préférence entre 6 et 18 m2g-1

4. Poudre selon l'une quelconque des revendications 1 à 3 caractérisée en ce que 95% des particules constituées sont comprises entre 0,2 et 2 μm, de préférence entre 0,3 et 1 μm, quand elle est destinée à l'obtention de pièces frittées.

5. Poudre selon l'une quelconque des revndications 1 à 3 caractérisée en ce que 95% des particules constituées sont comprises entre 10 et 100 μm, de préférence entre 10 et 60 μm quand elle est destinée à l'obtention de revêtement par projection à chaud.

6. Procédé d'obtention de la poudre de l'une quelconque des revendications 1 à 4, caractérisé en ce qu'on part d'une poudre de zircone de surface spécifique comprise entre 4 et 75 m2g-1 et de granulométrie inférieure à 0,1 μm, on l'imprègne en l'introduisant dans une solution de sels d'yttrium et de cérium décomposables thermiquement, on filtre la suspension obtenue, on sèche puis calcine.

7. Procédé d'obtention de la poudre de l'une quelconque des revendications 1 à 3 et 5, caractérisé en ce qu'on met en suspension aqueuse les poudres de zircone, d'oxyde d'yttrium et d'oxyde de cérium, on ajoute un liant organique, on sèche, puis éventuellement on calcine.

8. Pièces céramiques frittées obtenues à partir de poudre de l'une quelconque des revendications 1 à 4 caractérisées en ce que la proportion de zircone en phase quadratique est supérieure à 98%, que leur rupture à la flexion à froid après frittage est comprise entre 750 et 1200 MPa et que leur rupture à la flexion après maintien à des températures supérieures à 300°C est comprise entre 550 et 1200 MPa.

9. Revêtement de zircone obtenu par projection à chaud à l'aide de poudre de la revendication 5 caractérisé en ce que la proportion de zircone en phase quadratique est supérieure à 98%.

**Patentansprüche**

1. Zum Erhalten von keramischen Sinterteilen oder von Überzügen durch Heißaufspritzen mit nach Anlassen langer Dauer bei hoher Temperatur einschließlich in feuchter Atmosphäre verbesserten und stabilen mechanischen Eigen- schaften bestimmtes Zirkoniumoxidpulver, das mit Hilfe der Yttrium- und Ceroxide stabilisiert ist,
dadurch gekennzeichnet,
daß es zwischen 1 und 3,5 Mol% $Y_2O_3$ und zwischen 6 und 9 Mol% $CeO_2$ enthält.

2. Pulver nach dem Anspruch 1,
dadurch gekennzeichnet,
daß es zwischen 1 und 2 Mol% $Y_2O_3$ und zwischen 6 und 8 Mol% $CeO_2$ enthält.

3. Pulver nach irgendeinem der Ansprüche 1 und 2,
dadurch gekennzeichnet,
daß seine spezifische Oberfläche im Bereich von 4 bis 25 m2/g, vorzugsweise von 6 bis 18 m2/g liegt.

4. Pulver nach irgendeinem der Ansprüche 1 bis 3,
dadurch gekennzeichnet,
daß 95 % der gebildeten Teilchen im Bereich von 0,2 bis 2 μm, vorzugsweise von 0,3 bis 1 μm liegen,

wenn es zum Erhalten von Sinterteilen bestimmt ist.

5. Pulver nach irgendeinem der Ansprüche 1 bis 3,
dadurch gekennzeichnet,
daß 95 % der gebildeten Teilchen im Bereich von 10 bis 100 μm, vorzugsweise von 10 bis 60 μm liegen, wenn es zum Erhalten von Überzügen durch Heißaufspritzen bestimmt ist.

6. Verfahren zum Erhalten des Pulvers nach irgendeinem der Ansprüche 1 bis 4,
dadurch gekennzeichnet,
daß man von einem Zirkoniumoxidpulver einer spezifischen Oberfläche im Bereich von 4 bis 75 m²/g und einer Korngröße unter 0,1 μm ausgeht, es durch Einführen in eine Lösung thermisch zersetzbarer Yttrium- und Cersalze imprägniert, die erhaltene Suspension filtriert, trocknet und dann kalziniert.

7. Verfahren zum Erhalten des Pulvers nach irgendeinem der Ansprüche 1 bis 3 und 5,
dadurch gekennzeichnet,
daß man die Zirkoniumoxid-, Yttriumoxid- und Ceroxidpulver in wässerige Suspension bringt, ein organisches Bindemittel zusetzt, trocknet und dann eventuell kalziniert.

8. Aus Pulver nach irgendeinem der Ansprüche 1 bis 4 erhaltene keramische Sinterteile,
dadurch gekennzeichnet,
daß der Zirkoniumoxidanteil in quadratischer Phase über 98 % ist, daß ihre Kaltbiegefestigkeit nach dem Sintern im Bereich von 750 bis 1200 MPa ist und daß ihre Biegefestigkeit nach Halten bei Temperaturen über 300 °C im Bereich von 550 bis 1200 MPa ist.

9. Durch Heißaufspritzen mit Hilfe von Pulver nach dem Anspruch 5 erhaltener Zirkoniumoxidüberzug,
dadurch gekennzeichnet,
daß der Zirkoniumoxidanteil in quadratischer Phase über 98 % ist.

## Claims

1. Zirconia powder for obtaining fritted ceramic parts or coatings by hot spraying, having stable, improved mechanical properties following long term annealing at high temperature, including in a humid atmosphere and stabilized with the aid of yttrium and cerium oxides, characterized in that it contains between 1 and 3.5 molar % of $Y_2O_3$ and between 6 and 9 molar % of $CeO_2$.

2. Powder according to claim 1, characterized in that it contains between 1 and 2 molar % of $Y_2O_3$ and between 6 and 8 molar % of $CeO_2$.

3. Powder according to either of the claims 1 and 2, characterized in that its specific surface is between 4 and 25 m²g-1 and preferably between 6 and 18 m²g-1.

4. Powder according to any one of the claims 1 to 3, characterized in that 95% of the particles are between 0.2 and 2 μm, preferably between 0.3 and 1 μm, when it is intended for obtaining fritted parts.

5. Powder according to any one of the claims 1 to 3, characterized in that 95% of the particles are between 10 and 100 μm, preferably between 10 and 60 μm when it is intended to obtain coatings by hot spraying.

6. Process for obtaining the powder according to any one of the claims 1 to 4, characterized in that the starting product is a zirconia powder with a specific surface between 4 and 75 m²g-1 and a grain size below 0.1 μm, it is impregnated by introducing it into a solution of thermally decomposable yttrium and cerium salts, the suspension obtained is filtered, followed by drying and calcining.

7. Process for obtaining the powder according to any one of the claims 1 to 3 and 5, characterized in that the powders of zirconia, yttrium oxide and cerium oxide are brought into aqueous suspension, an organic binder is added, followed by drying and optionally calcining.

8. Fritted ceramic parts obtained from the powder of any one of the claims 1 to 4, characterized in that the quadratic phase zirconia proportion exceeds 98%, that the cold bending break after fritting is between 750 and 1200 MPa and the bending break after keeping at temperatures above 300°C is between 550 and 1200 MPa.

9. Zirconia coating obtained by hot spraying using the powder of claim 5, characterized in that the quadratic phase zirconia proportion exceeds 98%.

FIG.1

Zirconium Oxyde

Zr Y

Zr Ce Y

Yttrium Oxyde

Cerium Oxyde

Mol %

EP 0 437 154 B1

FIG. 2

Répartition statistique de la concentration molaire mesurée par microsonde
électronique, après un maintien de 2 heures à 1420°C.

EP 0 437 154 B1

FIG. 3

Répartition statistique de la concentration molaire mesurée par microsonde
électronique, après un maintien de 3 heures à 1700°C.

EP 0 437 154 B1